# EUROPÄISCHE PATENTSCHRIFT

(11) **EP 1 071 924 B1**
(45) Veröffentlichungstag und Bekanntmachung des Hinweises auf die Patenterteilung: **15.10.2003**
(21) Anmeldenummer: 00915109.3
(22) Anmeldetag: 17.02.2000
(51) Int. Cl.: G01B 11/27

(54) **LASER-MESSVERFAHREN ZUR BESTIMMUNG VON AZIMUT UND ELEVATION ZWEIER WERZEUGSPINDELN RELATIV ZU EINER BEZUGSEBENE**
LASER MEASURING METHOD FOR DETERMINING THE AZIMUTH AND ELEVATION OF TWO TOOL SPINDLES RELATIVE TO A REFERENCE PLANE
PROCEDE DE MESURE LASER DESTINE A DETERMINER L'AZIMUT ET L'ELEVATION DE DEUX BROCHES D'OUTIL PAR RAPPORT A UN PLAN DE REFERENCE

(30) Priorität: 17.02.1999 DE 19907880
(43) Veröffentlichungstag der Anmeldung: 31.01.2001
(73) Patentinhaber: Prüftechnik Dieter Busch AG, 85737 Ismaning (DE)
(72) Erfinder: PFISTER, Florian, D-81379 München (DE); UNGER, Andreas, D-85748 Garching (DE)
(86) Internationale Anmeldenummer: DE0000448
(87) Internationale Veröffentlichungsnummer: WO00049365

(56) Entgegenhaltungen:
- DE-A- 3 814 466
- DE-A- 3 911 307
- DE-A- 4 034 302
- DE-C- 3 619 931
- US-A- 4 518 855
- US-A- 4 698 491

## Beschreibung

### Stand der Technik

Die Erfindung betrifft ein Laser-Messverfahren zur Bestimmung von Azimut und Elevation zweier zueinander auszurichtender Werkzeugspindeln relativ zu einer Bezugsebene. Darüber hinaus betrifft die Erfindung ein Verfahren, mittels solcherart bestimmter Messwerte für Azimut und Elevation die Werkzeug-Spindeln in einfacher, kostengünstiger und zeitsparender Weise aufeinander auszurichten, insbesondere parallel auszurichten. Die Anmeldung beschätligt sich weiterhin mit der Bereitstellung passender Gerätschaften zur Durchführung des Verfahrens.

Es werden seit längerer Zeit Anstrengungen unternommen, um die Qualität von maschinenbearbeiteten Werkstücken mittels verschiedener Maßnahmen zu erhöhen. Eine dieser Maßnahmen betrifft die Vereinfachung der metrologischen Beurteilung von automatisierten Werkzeugmaschinen. Sowohl bei einer Neuinstallation, als auch nach Maßgabe eines Inspektionsplanes, ist es erforderlich, die tatsächlichen geometrisch/mechanischen Kennwerte einer Werkzeugmaschine mit angenommenen Idealwerten zu vergleichen. Bei unzulässigen Abweichungen sind entsprechende Korrekturmaßnahmen erforderlich, sofern solche überhaupt durchgeführt werden können. Speziell nach den gelegentlich vorkommenden Fehlbedienungen an solchen Maschinen, bei denen z. B ein Werkzeughalter in den Aktionsbereich einer Spannzange oder des Backenfutters verfahren wird (oder ähnlichen sog. Crashs), sollte überprüft werden, ob die tatsächlich existierenden geometrisch/mechanischen Kennwerte einer Werkzeugmaschine mit den zugrunde gelegten Idealwerten im Rahmen der zugelassenen Toleranzfelder übereinstimmen.

Zu diesem Zweck werden in der Zwischenzeit neben herkömmlichen mechanischen Messinstrumenten solche benutzt, deren Messzeiger auf Basis eines lichtoptischen Strahls, insbesondere eines Laserstrahls basieren. Solche Systeme werden in der DE 3 911 307 und in der DE 40 34 302 A1 (zugehörige US-Patentschritt 5 224 052; Erfinder Hamar) beschrieben. In letztgenannter Schrift werden auch wertere oder ähnliche Systeme der genannten Art diskutiert. Mit den genannten Systemen ist es jedoch mittels den dort dargestellten Methoden der Spindelausrichtung nicht möglich, eine Aussage hinsichtlich der Ausrichtung mehrerer Spindeln relativ zu einer Bezugsebene bereit zu stellen. Dies gilt speziell für das Problem, eine jeweilige Elevation für zwei Maschinenachsen einzeln und relativ zu einer schräg gestellten, also geneigten, Referenzebene anzugeben. Das gleiche gilt, wenn vergleichbare azimutale Ausrichtungs-Differenzen von Spindeln bezüglich einer gemeinsamen Verfahrlinie und koplanar zur genannten Referenzebene bestimmt werden soll.

### Aufgabe der Erfindung

Die Aufgabe der Erfindung besteht darin, das vorgenannte Problem mit kostengünstigen Messeinrichtungen zu lösen, bei deren Handhabung wenig metrologische Probleme entstehen und wobei die Handhabung als besonders unkompliziert einzustufen ist. Diese Aufgabe wird mit den Mitteln gelöst, deren Merkmale in den unabhängigen Ansprüchen angegeben sind.

Die Erfindung beruht im Wesentlichen auf einem Verfahren, gemäß welchem zunächst eine winkelmäßige Relativlage zweier Werkzeugmaschinen-Spindeln oder dergleichen nach zwei Winkelkoordinaten (Azimut und Elevation, entsprechend Yaw und Pitch) im Raum ausgemessen werden, weiterhin eine Bestimmung eines in einer ersten vordefinierten Ebene existierenden effektiven Abstandes der zu den Werkzeugspindeln gehörigen Rotationsachsen durchgeführt wird, sodann die effektive distale Beabstandung der Werkzeugspindeln kontrolliert variiert wird, sodann erneut die winkelmäßige räumliche Relativlage der genannten Winkelkoordinaten zueinander ausgemessen werden, und sodann eine weitere Bestimmung eines in einer zweiten vordefinierten Ebene existierenden effektiven Abstandes der zu den Werkzeugspindeln gehörigen Rotationsachsen durchgeführt wird, und schließlich unter Bezugnahme auf die so aufgefundenen Messwerte die jeweils einzelnen winkelmäßigen Relativlagen der Werkzeugmaschinen-Achsen nach Azimut und Elevation errechnet werden, insbesondere bezüglich eines Koordinatensystems, welches einer vordefinierten Referenz-Ebene zugeordnet ist. Die vordefinierte Referenzebene definiert dabei typischerweise eine von mehreren Randbedingungen für die kontrollierte Veränderung der distalen Beabstandung der beteiligten Spindeln, und sie bezieht sich dabei mit Vorteil auf eine durch ein Maschinenbett vorgegebene Ebene - Bei der Ausführung des erfindungsgemäßen Verfahrens ist es darüber hinaus möglich, ohne zusätzliche Messvorgange den relativen linearen Offset der Werkzeugspindeln nach zwei (translatorischen) Raumkoordinaten mit sehr hoher Messgenauigkeit zu bestimmen

Die Vorteile des Verfahrens bestehen darin, dass eine der Spindeln einer Werkzeugmaschine in einfacher Weise lediglich mit einem optisch/mechanisch wirkenden Spiegelprisma oder Retroreflektor bestückt zu werden braucht, welches somit von sehr einfacher, wenn auch hochgenauer mechanisch/optischer Konstruktion ist. Gleichzeitig ist die jeweils andere, zugehörige und ebenfalls zu überprüfende Spindel einer Werkzeugmaschine mit einem Sende-/Empfangsteil ausgerüstet, welches dazu dient, einen Lichtstrahl auf das Spiegelprisma zu werfen und den reflektierten Lichtstrahl auf einer Messfläche des Empfangsteils zu lokalisieren, d. h. dessen Auftreffpunkt auf einer solchen Messfläche mittels geeigneter Messtechnik in zumindest einer, mit besonderem Vorteil jedoch in zwei Dimensionen zu bestimmen. Hierzu werden in an sich bekannter Art optoelektrische Sensoren und zugehörige Interface-Schaltungen samt angeschlossener Computer oder Controller verwendet. Die vorgenannte Separation von elektronischen und nichtelektronisch wirkenden Komponenten stellt sicher, dass die Handhabung der erfindungsgemäß vorgesehenen Gerätschaften äußerst einfach und bequem verfolgen kann.

### Beispiele

Die Erfindung wird im Folgenden anhand eines Beispieles und zugehöriger Figuren beschrieben.

### Es zeigt

Fig. 1 die zur Benutzung im erfindungsgemäßen Verfahren vorgesehenen optischen, optoelektronischen und elektronischen Komponenten des Systems, wie zur Ausführung der Erfindung vorgeschlagen.
Fig. 2 die geometrischen Verhältnisse für beteiligte Achsen und Bezugslinien oder -ebenen

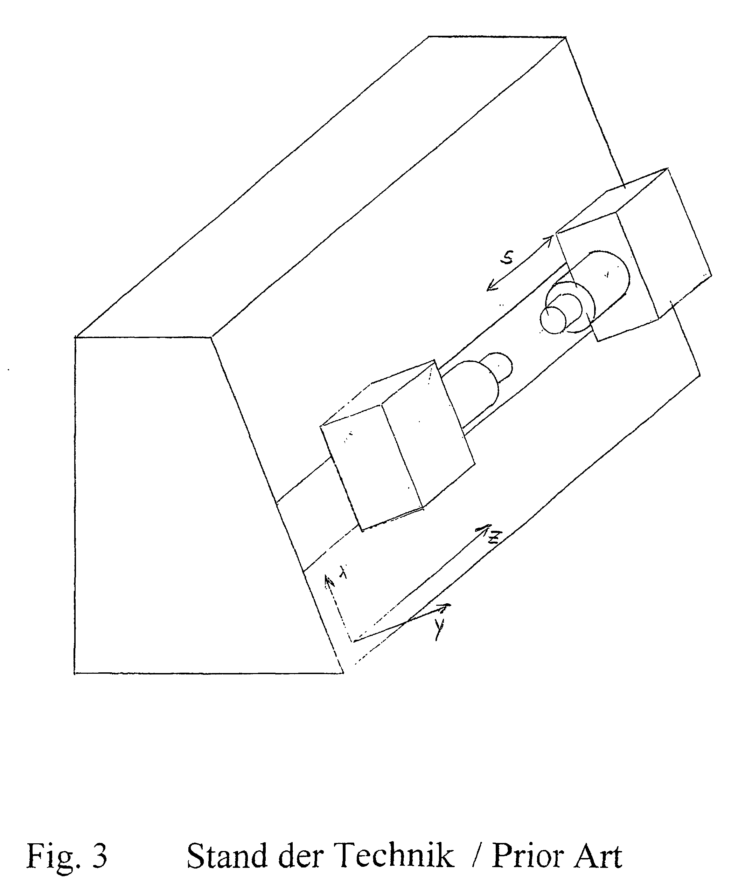

Fig. 3 eine perspektivische schematische Ansicht auf eine Werkzeugmaschine nach dem Stand der Technik, wie zur Anwendung des erfindungsgemässen Verfahrens geeignet

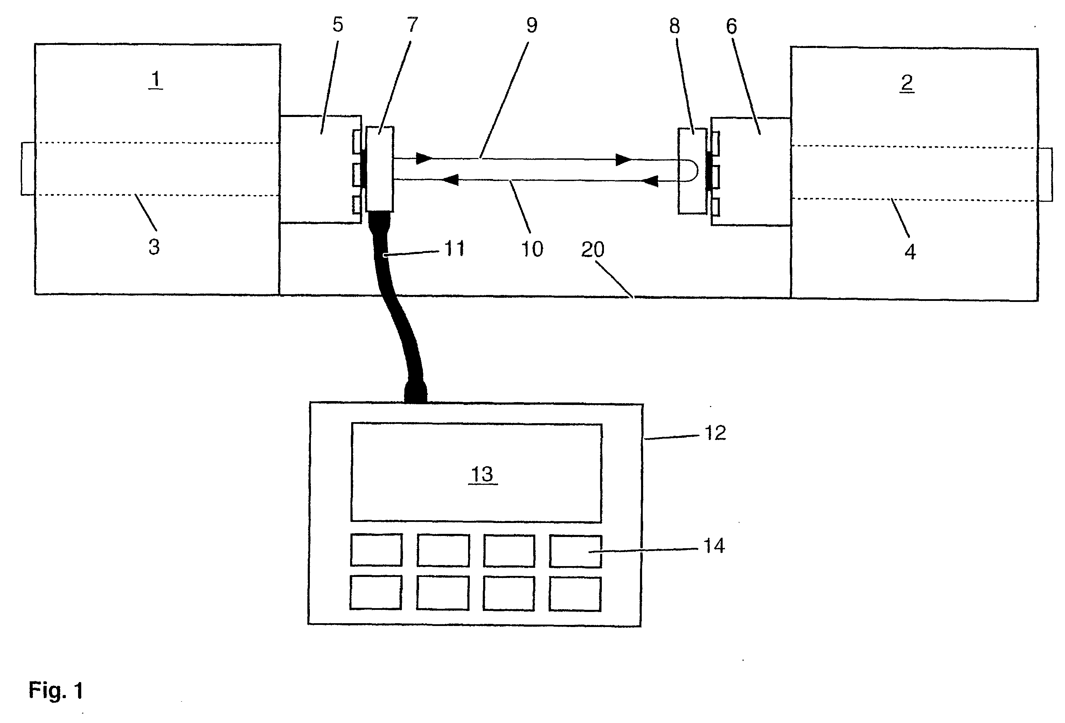

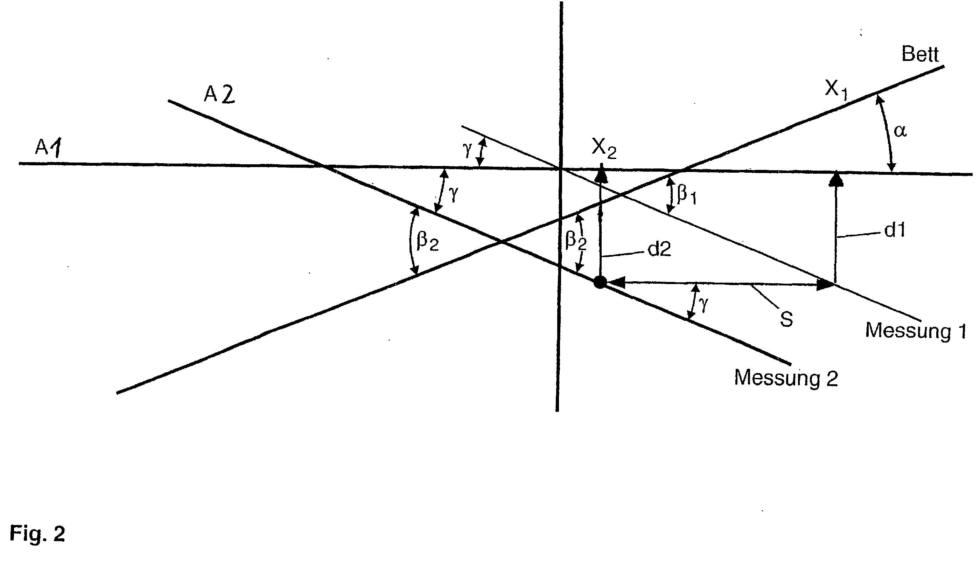

Die in Fig. 1 und 2 gezeigten Werkzeugmaschinen 1 und 2 können entlang einer Auflagefläche 20 gegeneinander verschoben werden, wobei die entsprechende Verschiebebewegung als im Wesentlichen linear anzusehen ist Falls es einer Bedienperson unklar sein sollte, ob die genannte Voraussetzung zutrifft, so kann in vorteilhafter Weise mit den gleichen Gerätschaften, mit denen das erfindungsgemaße Verfahren durchgeführt wird, eine diesbezügliche Überprüfung auf Geradheit (straightness) an der zu untersuchenden Werkzeugmaschine durchgeführt werden.

Bei der Durchführung des erfindungsgemäßen Messverfahrens kommt es einer Bedienperson hauptsächlich darauf an, nicht nur einen eventuell existierenden linearen Offset (also parallele Verlagerung) der Maschinenspindeln zu bestimmen, sondern auch deren Ausrichtung in Azimut (yaw) und Elevation (pitch) zu ermitteln. Zu diesem Zweck wird mit Vorteil ein Koordinatensystem verwendet, welches in die Auflagefläche 20 gelegt ist.

Zur Korrektur der genannten Fehlwinkel ist es also erforderlich, diese zunächst messtechnisch zu bestimmen, und dann mittels geeigneter Justagemaßnahmen an der aktuell überprüften Werkzeugmaschine möglichst weitgehend zu unterdrücken.

Das erfindungsgemäße Verfahren sieht hierbei vor, in eine vorhandene Aufnahmevorrichtung 5 der Werkzeugmaschine 1 ein Sende-/Empfangsteil 7 einzuspannen. Das Sende-/Empfangsteil 7 dient zum einen dazu, Lichtstrahlen 9 in Richtung der Werkzeugmaschine 2 zu emittieren. Hierzu werden mit Vorteil an sich bekannte, optoelektronische und optische Elemente verwendet, wie sie z. B. in einem Halbleiterlaser zu finden sind. Das Sende-/Empfangsteil 7 ist weiterhin mit einer Datenübertragungseinrichtung 11 versehen, mit der ein mono- oder bidirektionaler Austausch von Daten zu einem tragbaren Bedienteil 12 durchgeführt werden kann. Die Datenübertragungseinrichtung 11 kann drahtgebunden oder drahtlos funktionieren.

Die emittierten Lichtstrahlen 9 fallen auf ein Spiegelprisma 8 auf, dessen Halterung bevorzugt zylindrisch ausgestaltet ist, und welche mit einem ebenfalls zylindrischen Spannzapfen versehen ist. Der genannte Spannzapfen kann direkt und in bequemer Weise in die Spann- oder Aufnahmevorrichtung 6 der Werkzeugmaschine 2 eingespannt werden. Auf diese Weise kann das Spiegelprisma, zugleich und im Wesentlichen synchron, mit dem Sende-/Empfangsteil 7, rotiert werden. Dies erfolgt entweder per geeigneter Befehlsgabe vermittels des Bedienteils 12 an die Maschine 2, oder aber von Hand, so dass die Spindel 4 um einen vordefinierten Winkel um ihre Drehachse gedreht wird.

Der Lichtstrahl 9 wird durch das Spiegelprisma 8 reflektiert. Dessen Querschnitt entspricht einem rechtwinkligen Dreieck, welches gleichlange Katheten aufweist.

Die optische und optoelektronische Anordnung und Wirkungsweise entspricht dabei verschiedenen Komponenten, wie sie aus der DE 38 144 66 bekannt sind, und deren Funktion im Einzelnen hier zur Vermeidung von Längen nicht wiederholt wird. Es sei festgehalten, dass mit einer solchen Anordnung lateraler und angularer Versatz in jeweils zwei Achsen/Koordinaten quantitativ ausgemessen werden kann. Ein spezielles diesbezüglich anwendbares Verfahren wird in der DE 39 11 307 genannt.

Das erfindungsgemäße Verfahren wird gemäß Fig. 2 folgendermaßen ausgeführt:

Zunächst wird unter Zuhilfenahme des Spiegelprismas 8 sowie des Sende-/Empfangsteils 7, gegebenenfalls nach einer erforderlichen Drehung der Spindeln 3 und/oder 4, deren relative Elevation "gamma" zueinander bestimmt und für die weitere Auswertung in einem geeigneten elektronischen Speicher des Bedienteils 12 registriert. Diese Messung ist aufgrund der Eigenschaften der verwendeten Messgeräte ohne weitere Massnahmen oder Manipulationen möglich. Wichtig ist bei dieser Messung jedoch eine definierte winkelmässige Ausrichtung zwischen Sende-/Empfangsteil 7 und dem Spiegelprisma 8. Gleichzeitig wird nun der mittels Sende-/Empfangsteil 7 und dem Spiegelprisma 8 ebenfalls festgestellte achsiale Versatz "d1" der Spindelachsen gegeneinander vermessen, und zwar in einer solchen Ebene, die auch zur Bestimmung der Elevation dient. Der Versatzwert "d1" wird ebenfalls im Bedienteil 12 registriert.

Danach wird eine der beiden Werkzeugmaschinen 1, 2 samt zugehöriger Spindel distal und definiert um eine Strecke "s" gegenüber der anderen verschoben, und zwar im Wesentlichen in der durch das Maschinenbett und vorhandenen Werkzeugspindelführungen vorgegebenen Richtung. Der zugehörige Messwert für die Verschiebung um "s" wird sodann in das Bedienteil manuell oder automatisiert eingegeben.

Daraufhin wird erneut gemäß obig angegebenem Schema nach einer erforderlichen Drehung der Maschinenspindeln deren relative Elevation "gamma " zueinander bestimmt. Dieser Wert sollte dem zuvor ermittelten Wert "gamma" entsprechen, zumindest bis auf einen geringen, vordefinierbaren Fehler. Bei Nichtübereinstimmung kann das Bediengerät eine Fehlermeldung ausgeben. Desgleichen wird erneut und nach dem gleichen Messverfahren der zu dieser Elevation vorliegende achsiale Versatz "d2" der Spindeln bestimmt und im Bedienteil 12 registriert. Dieser Wert stimmt nur ausnahmsweise mit dem zuerst bestimmten überein. Wie aus Fig. 2 ersichtlich, läßt sich nämlich aus dem Verhältnis aus Differenz d1-d2 zur Strecke "s" gemäß bekannten trigonometrischen Funktionen der Winkelwert "alpha" errechnen. Dieser Winkelwert ist nun gleichzeitig die Elevation der ersten Spindelachse gegenüber dem gemeinsamen Maschinenbett. Die Beziehung der Winkelwerte untereinander errechnen sich nun gemäss der Erfindung dadurch, dass der Winkelwert ''beta'' sich additiv aus den Anteilen "alpha" plus "gamma" zusammensetzt, wobei "beta" die Elevation der zweiten Spindelachse gegenüber dem Maschinenbett kennzeichnet.

Mit diesem Verfahren können somit zwei gesuchte Elevationen ermittelt werden.

Die ebenfalls erforderliche Bestimmung der Werte für Winkelabweichungen der Spindeln gegeneinander, in einer azimutaler Richtung ( yaw) relativ zu einer Bezugsebene, wird in völlig vergleichbarer Weise durchgeführt. Mittels dem obig vorgeschlagenen Messwerkzeug kann daher eine simultane Bestimmung der Fehler-Winkel sowohl in azimutaler als auch in elevationsmäßiger Richtung durchgeführt werden.

Damit genügt eine einzige Verschiebebewegung der Spindeln gegeneinander, um einen vollständigen Satz interessierender Messergebnisse zu erhalten. Anhand dieser kann das Bedienteil 12 sodann Vorschläge für eine effiziente Korrektur der Spindellagen errechnen (z.B. für eine Korrektur mittels Justierschrauben oder dgl. ). Hierdurch kann eine turnusmäßige Überprüfung und ggf. die Justage von Werkzeugmaschinen wesentlich schneller durchgeführt werden, als dies vorher möglich war Ein besonderer Vorteil des erfindungsgemäßen Verfahrens besteht darin, dass mit ein und demselben Messvorgang, der aus nur wenigen Mess-Schritten besteht, sowohl eine angulare Relativlage von zwei Maschinenspindeln bezüglich einer Referenzebene, als auch deren linearer Versatz (offset) nach zwei Achsen im Raum bestimmbar ist.

## Patentansprüche

1. Laser-Messverfahren zur Bestimmung von Azimut und Elevation zweier zueinander auszurichtender Werkzeugspindeln (3,4) relativ zu einem Maschinenbett (20), welche in folgenden Schritten ausgeführt wird:
a) Optoelektronische Bestimmung einer winkeimäßigen Relativlage der Werkzeugspindeln (3,4) zueinander, nach zwei Winkelkoordinaten, in einem Winkelkoordinatensystem, welches durch eine zu einer Werkzeugspindel gehörigen Rotationsachse (A1) und eine hierzu lotrechte Richtung definiert ist.
b) Bestimmung eines in einer ersten vordefinierten Querschnittsfläche existierenden achsialen Versatzes (d₁) der zu den Werkzeugspindein (3,4) gehörigen Rotationsachsen (A1,A2).
c) Kontrollierte Veränderung der effektiven distalen Beabstandung der Werzeugspindeln um eine definierte Strecke (s) entlang einer im wesentlichen durch das Maschinenbett und die Werkzeugspindelführungen vorgegebenen Richtung.
d) Erneute optoelektronische Bestimmung der winkelmässigen Relativlage der Werkzeugspindeln zueinander, in dem im Schritt a) genannten Winkelkoordinatensystem.
e) Bestimmung eines zweiten in einer zweiten vordefinierten Querschnittsfläche existierenden achsialen Versatzes (d₂) der zu den Werkzeugspindeln (3,4) gehörigen Rotationsachsen (A1,A2).
f) Berechnung der jewells einzelnen winkelmäßigen Positionen Azimut und Elevation (α,β) der Spindelachsen (A1,A2) in einer durch das Maschinenbett (20) definierten Referenz-Ebene.

2. Verfahren nach Anspruch 1, wobei die Referenz-Ebene die Oberfläche des Meschinenbetts ist.

3. Verfahren nach Anspruch 1 oder 2, wobei zur Bestimmung sowohl der winkelmässigen Relativlage, als auch des achsialen Versatzes der Rotationsachsen, ein aus mehreren separaten Komponenten bestehendes Messystem angewendet wird, welches einerseits ein kombiniertes Sende-/Empfangssystem aufweist, andererseits einen Retroreflektor oder ein retroreflektierendes Winkelprisma aufweist.

4. Verfahren nach Anspruch 3, ein Messystem zur Anwendung gebracht wird, welches zeitgleich und in Echtzeit Winkelabweichungen nach zwei Winkelkoordinaten und einen Parallelversatz nach zwei translatorischen Koordinaten erfassen kann.

5. Verfahren nach einem der vorhergehenden Ansprüche, wobei in dem Messystem ein einziger Halbleiterlaser verwendet wird

## Claims

1. Laser measurement method for determining the azimuth and elevation of two tool spindles (3, 4), which are to be aligned with respect to one another, relative to a machine bed (20), which method is carried out in the following steps:
a) Optoelectronic determination of an angular relative position of the tool spindles (3, 4) with respect to one another, based on two angle coordinates, in an angle coordinate system which is defined by a rotation axis (Al) associated with one tool spindle, and by a direction at right angles to this.
b) Determination of an axial offset (d₁), which exists in a first predefined cross-section area, of the rotation axes (A1, A2) associated with the tool spindles (3, 4).
c) Controlled variation of the effective distal distance between the tool spindles by a defined distance (s) along a direction which is essentially predetermined by the machine bed and the tool spindle guides.
d) Repeated optoelectronic determination of the angular relative position of the tool spindles with respect to one another, using the angle coordinate system mentioned in step a).
e) Determination of a second axial offset (d₂), which exists in a second predefined cross-section area, of the rotation axes (A1, A2) which are associated with the tool spindles (3, 4).
f) Calculation of the respective individual angular positions in azimuth and elevation (α, β) of the spindle axes (A1, A2) in a reference plane which is defined by the machine bed (20).

2. Method according to Claim 1, in which the reference plane is the surface of the machine bed.

3. Method according to Claim 1 or 2, in which a measurement system which comprises a number of separate components is used for determining both the angular relative position and the axial offset of the rotation axes, which measurement system firstly has a combined transmitting/receiving system and secondly has a retroreflector or a retroreflective angled prism.

4. Method according to Claim 3, in which a measurement system is used which can simultaneously and in real time detect angle discrepancies based on two angle coordinates, and a parallel offset based on two translational coordinates.

5. Method according to one of the preceding claims, in which a single semiconductor laser is used in the measurement system.

## Revendications

1. Procédé de mesure laser destiné à déterminer l'azimut et l'élévation de deux broches d'outil (3, 4) à aligner l' une avec l' autre par rapport à un banc (20) de la machine, qui est mis en oeuvre par les étapes suivantes:
a) détermination optoélectronique d'une position angulaire relative des broches d'outil (3, 4) l'une par rapport à l'autre, suivant deux coordonnées angulaires, dans un système de coordonnées angulaires, qui est défini par un axe de rotation (A1) lié à une broche d'outil et une direction perpendiculaire à celui-ci;
b) détermination d'un déport axial (d₁) existant dans une première surface de section transversale prédéfinie, des axes de rotation (A1, A2) liés aux broches d'outil (3, 4);
c) modification contrôlée de la distance distale effective des broches d'outil d'une longueur définie (s) le long d'une direction prédéterminée essentiellement par le banc de la machine et les guides des broches d'outil;
d) nouvelle détermination optoélectronique de la position angulaire relative des broches d'outil l'une par rapport à l'autre, dans le système de coordonnées angulaires mentionné dans l'étape a);
e) détermination d'un second déport axial (d₂) existant dans une seconde face de section transversale prédéfinie des axes de rotation (A1, A2) liés aux broches d'outil (3, 4);
f) calcul de chacune des positions angulaires, azimut et élévation (α, β) des axes des broches (A1, A2) dans un plan de référence défini par le banc (20) de la machine.

2. Procédé suivant la revendication 1, dans lequel le plan de référence est la surface du banc de la machine.

3. Procédé suivant la revendication 1 ou 2, dans lequel on utilise, pour la détermination aussi bien de la position angulaire relative que du déport axial des axes de rotation, un système de mesure composé de plusieurs composants séparés, qui présente d'une part un système combiné d'émission/réception et qui présente d'autre part un rétroréflecteur ou un prisme rectangle rétroréfléchissant.

4. Procédé suivant la revendication 3, dans lequel on met en application un système de mesure, qui peut déterminer en même temps et en temps réel des écarts angulaires suivant deux coordonnées angulaires et un déport parallèle suivant deux coordonnées de translation.

5. Procédé suivant l'une quelconque des revendications précédentes, dans lequel on utilise dans le système de mesure un seul laser à semiconducteur.
